# EUROPEAN PATENT APPLICATION

(11) **EP 4 553 640 A1**
(43) Date of publication of application: **14.05.2025**
(21) Application number: 23910486.2
(22) Date of filing: 25.12.2023
(51) Int. Cl.: G06F 3/14

(54) **CONTROL METHOD, AND DEVICE**

(30) Priority: 30.12.2022 CN 202211721706
(71) Applicant: Huawei Technologies Co., Ltd., Shenzhen, Guangdong 518129 (CN)
(72) Inventor: DING, Xiaolong, Shenzhen, Guangdong 518129 (CN); XU, Liang, Shenzhen, Guangdong 518129 (CN); LI, Yinghao, Shenzhen, Guangdong 518129 (CN); ZHOU, Xingchen, Shenzhen, Guangdong 518129 (CN); LI, Li, Shenzhen, Guangdong 518129 (CN)
(74) Representative: Körber, Martin Hans
(86) International application number: PCT/CN2023/141527
(87) International publication number: WO 2024/140560

(57) **Abstract**

A control method is applied to an electronic device, the electronic device includes a first screen and a second screen, and method includes: after a first user account is logged in to on the first screen, switching a user account on the first screen to the first user account; after a second user account is logged in to on the second screen, switching a user account on the second screen to the second user account; and running a first application on the first screen by using the first user account, and running the first application on the second screen by using the second user account. In this way, different accounts may be logged in to on different screens, and a same application may run on different screens. Therefore, the same application can be started and used on a plurality of screens at the same time, so that use requirements of a user in a plurality of scenarios in a cockpit are met, and user experience is improved. A device is further provided.

## Description

This application claims priority to Chinese Patent Application No. 202211721706.8, filed with the China National Intellectual Property Administration on December 30, 2022 and entitled "CONTROL METHOD AND DEVICE", which is incorporated herein by reference in its entirety.

### TECHNICAL FIELD

This application relates to the field of electronic devices, and in particular, to a control method and a device.

### BACKGROUND

With rapid development of intelligent cockpit technologies, a user has more diversified requirements for functions of a head unit. To provide the user with more personalized and human-cultural use experience, more displays are configured in an intelligent cockpit. When a plurality of displays are configured in the intelligent cockpit, a scenario in which a plurality of users need to simultaneously use the displays occurs. However, in the conventional technology, when a plurality of users simultaneously use displays, there are a series of problems, for example, personalized data cannot be used, data cannot be shared across accounts, and simultaneous dragging cannot be implemented.

### SUMMARY

Embodiments of this application provide a control method and a device, to improve use efficiency in a multi-screen scenario in a cockpit and improve user experience.

To achieve the foregoing objective, this application uses the following technical solutions.

According to a first aspect, this application provides a control method. The method may be applied to an electronic device, the electronic device includes a first screen and a second screen, and the method includes: after a first user account is logged in to on a first screen, switching a user account on the first screen to the first user account; after a second user account is logged in to on a second screen, switching a user account on the second screen to the second user account; and running a first application on the first screen by using the first user account, and running the first application on the second screen by using the second user account.

In the method, different accounts are logged in to on different screens, and a same application may run on different screens. Therefore, the same application can be started and used on a plurality of screens at the same time, so that use requirements of a user in a plurality of scenarios in a cockpit are met, and user experience is improved.

In a possible implementation, after the switching a user account on the first screen to the first user account, the method further includes: storing a correspondence between a screen identifier of the first screen and a user identifier of the first user account. After the switching a user account on the second screen to the second user account, the method further includes: storing a correspondence between a screen identifier of the second screen and a user identifier of the second user account.

In this implementation, a correspondence between a screen identifier and a user account may be directly established and stored, to manage a relationship between a screen and a user account.

According to a second aspect, this application provides a control method. The method may be applied to an electronic device, the electronic device includes at least a first screen, and the method includes: detecting that a first download operation is performed on the first screen by using a first user account, and storing first data in a first storage area, where the first download operation is used to download the first data.

In a possible implementation, the method further includes: detecting that a second download operation is performed on the first screen by using a second user account, obtaining the first data from the first storage area, and using the first data on the first screen; or detecting that a second download operation is performed on a second screen by using a second user account, obtaining the first data from the first storage area, and using the first data on the second screen, where the second download operation is used to download the first data.

In the method, a user may log in to different user accounts on different screens of a head unit and use public data, or a user may log in to different user accounts on a same screen of a head unit and use public data, so that data sharing between a plurality of users can be implemented.

According to a third aspect, this application provides a control method. The method may be applied to an electronic device, the electronic device includes at least a first screen, and the method includes: initiating, on a first screen, a first task in a first application by using a first user account; storing task information of the first task; logging in to a second user account on the first screen; and continuing the first task on the first screen based on the task information of the first task by using the second user account.

In the method, task continuation can be implemented between different user accounts, so that user experience can be improved.

According to a fourth aspect, this application provides a control method. The method may be applied to a system including a first electronic device and a second electronic device, the first electronic device includes a first screen, the second electronic device includes a second screen, and the method includes: After a first user account is logged in to on the first screen, the first electronic device switches a user account on the first screen to the first user account, and synchronizes the first user account to the second electronic device; after a second user account is logged in to on the second screen, the second electronic device switches a user account on the second screen to the second user account, and synchronizes the second user account to the first electronic device; the first electronic device runs a first application on the first screen by using the first user account; and the second electronic device runs the first application on the second screen by using the second user account.

In the method, when a logged-in user account on a screen of a chip changes, an updated user account may be synchronized to another chip. In this way, detection on mutual exclusion for a same user can be implemented, detection for a uniform specification such as a maximum quantity of users can be performed, and the like.

In a possible implementation, after the first user account is logged in to on the first screen, the method further includes: The first electronic device stores a correspondence between a screen identifier of the first screen and a user identifier of the first user account. After the second user account is logged in to on the second screen, the method further includes: The second electronic device stores a correspondence between a screen identifier of the second screen and a user identifier of the second user account.

In this implementation, a correspondence between a screen identifier and a user account may be directly established and stored, to manage a relationship between a screen and a user account.

In a possible implementation, the first electronic device and the second electronic device are respectively different chips in a multi-chip multi-screen cockpit.

According to a fifth aspect, this application provides a control method. The method may be applied to a system including a first electronic device and a second electronic device, the first electronic device includes a first screen, the second electronic device includes a second screen, and the method includes: downloading a third application on the first screen by using a first user account; synchronizing, by the first electronic device, related data of the third application to the second electronic device; and running the third application on the second screen based on the related data of the third application by using a second user account.

In the method, when a user uses screens corresponding to different chips, data synchronization in a cross-chip system can be implemented, and the user can use same data on the screens corresponding to the different chips, thereby improving user experience.

In a possible implementation, the first electronic device and the second electronic device are respectively different chips in a multi-chip multi-screen cockpit.

According to a sixth aspect, this application provides a control method. The method may be applied to an electronic device, the electronic device includes a first screen and a second screen, and the method includes: detecting a first operation on the first screen, and creating a first instance based on a screen identifier of the first screen; detecting a second operation on the second screen, and creating a second instance based on a screen identifier of the second screen; detecting that the first operation ends, and clearing the first instance based on the screen identifier of the first screen; and detecting that the second operation ends, and clearing the second instance based on the screen identifier of the second screen.

In a possible implementation, an operation time of the first operation is the same as that of the second operation, or an operation time of the first operation overlaps that of the second operation.

In the method, when a user operates the first screen on the first screen, another user may simultaneously operate the second screen on the second screen. Therefore, a plurality of users can simultaneously operate a plurality of screens, thereby improving user experience.

According to a seventh aspect, this application provides a control method. The method may be applied to an electronic device, the electronic device includes a first screen and a second screen, and the method includes: detecting that a third operation is performed in a first editing area of the first screen; when the first editing area is an editable area, displaying an input method on the first screen; detecting that a fourth operation is performed in a second editing area of the second screen; and when the second editing area is an editable area, displaying the input method on the second screen.

In the method, the input method can be used on a plurality of screens in a time division manner, and an input method focus can be flexibly switched, thereby improving user experience of using the input method.

In a possible implementation, the method further includes: when the second editing area is a non-editable area, continuing to display the input method on the first screen.

In a possible implementation, a window focus is switched onto the second screen.

According to an eighth aspect, an electronic device is provided. The electronic device includes one or more processors and a memory, and the processor is coupled to the memory. The memory is configured to store computer program code, the computer program code includes computer instructions, and when the computer instructions are executed by the electronic device, the electronic device is enabled to perform the method according to any one of the first aspect or the possible implementations of the first aspect, or perform the method according to any one of the second aspect or the possible implementations of the second aspect, or perform the method according to any one of the third aspect or the possible implementations of the third aspect, or perform the method according to any one of the sixth aspect or the possible implementations of the sixth aspect, or perform the method according to any one of the seventh aspect or the possible implementations of the seventh aspect.

According to a ninth aspect, a computer-readable storage medium is provided. The computer-readable storage medium stores computer program instructions, and when the computer program instructions are executed by an electronic device, the electronic device is enabled to implement the method according to any one of the first aspect or the possible implementations of the first aspect, or perform the method according to any one of the second aspect or the possible implementations of the second aspect, or perform the method according to any one of the third aspect or the possible implementations of the third aspect, or perform the method according to any one of the sixth aspect or the possible implementations of the sixth aspect, or perform the method according to any one of the seventh aspect or the possible implementations of the seventh aspect.

According to a tenth aspect, a computer program product is provided, including computer-readable code or a non-volatile computer-readable storage medium carrying computer-readable code. When the computer-readable code is run in an electronic device, a processor in the electronic device performs the method according to any one of the first aspect or the possible implementations of the first aspect, or performs the method according to any one of the second aspect or the possible implementations of the second aspect, or performs the method according to any one of the third aspect or the possible implementations of the third aspect, or performs the method according to any one of the sixth aspect or the possible implementations of the sixth aspect, or performs the method according to any one of the seventh aspect or the possible implementations of the seventh aspect.

According to an eleventh aspect, a chip is provided. When the chip runs, the chip performs the method according to any one of the first aspect or the possible implementations of the first aspect, or performs the method according to any one of the second aspect or the possible implementations of the second aspect, or performs the method according to any one of the third aspect or the possible implementations of the third aspect, or performs the method according to any one of the sixth aspect or the possible implementations of the sixth aspect, or performs the method according to any one of the seventh aspect or the possible implementations of the seventh aspect.

According to a twelfth aspect, a system is provided. The system includes the first electronic device and the second electronic device according to any one of the fourth aspect or the possible implementations of the fourth aspect, or includes the first electronic device and the second electronic device according to any one of the fifth aspect or the possible implementations of the fifth aspect.

For beneficial effects of the eighth aspect to the twelfth aspect, refer to descriptions about the beneficial effects of the first aspect to the eleventh aspect. Details are not described herein again.

### BRIEF DESCRIPTION OF DRAWINGS

FIG. 1 is a diagram of a cockpit according to an embodiment of this application;
FIG. 2A is a diagram of a hardware structure of an electronic device according to an embodiment of this application;
FIG. 2B is a diagram of a software architecture of an electronic device according to an embodiment of this application;
FIG. 3 is a diagram of an interface according to an embodiment of this application;
FIG. 4 is a schematic flowchart according to an embodiment of this application;
FIG. 5 is another schematic flowchart according to an embodiment of this application;
FIG. 6 is another schematic flowchart according to an embodiment of this application;
FIG. 7 is another schematic flowchart according to an embodiment of this application;
FIG. 8 is another schematic flowchart according to an embodiment of this application;
FIG. 9 is another schematic flowchart according to an embodiment of this application;
FIG. 10(a) and FIG. 10(b) are a diagram of another interface according to an embodiment of this application;
FIG. 11 is another schematic flowchart according to an embodiment of this application;
FIG. 12 is another schematic flowchart according to an embodiment of this application; and
FIG. 13 is a diagram of composition of a chip system according to an embodiment of this application.

### DESCRIPTION OF EMBODIMENTS

The following describes some terms in embodiments of this application, to facilitate understanding of a person skilled in the art.

In embodiments of this application, "at least one" includes one or more, and "a plurality of" means two or more. In addition, it should be understood that in descriptions of this specification, words such as "first" and "second" are merely intended for the purpose of differentiated description, and should not be understood as expressing or implying relative importance or a sequence. For example, a first window and a second window do not represent importance degrees of the first window and the second window or a sequence of the first window and the second window, and are merely used for differentiated description. The term "and/or" in embodiments of this application describes only an association relationship and represents that three relationships may exist. For example, A and/or B may represent the following three cases: Only A exists, both A and B exist, and only B exists. In addition, the character "/" in this specification usually indicates an "or" relationship between the associated objects.

The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation or be constructed and operated in a specific orientation. Therefore, this cannot be understood as a limitation on embodiments of this application.

Reference to "an embodiment", "some embodiments", or the like described in this specification means that specific features, structures, or characteristics described with reference to the embodiment are included in one or more embodiments of this specification. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner.

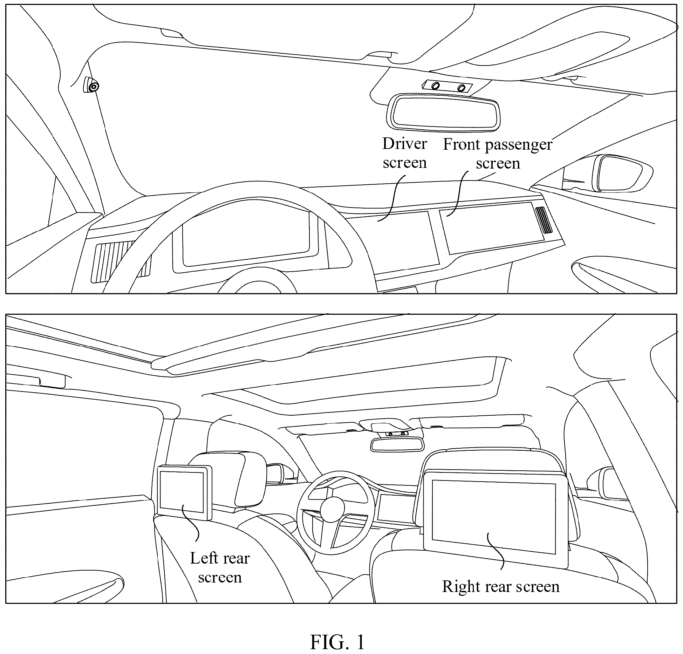

With rapid development of intelligent cockpit technologies, a user has more diversified requirements for functions of a head unit. To provide the user with more personalized and human-cultural use experience, more displays are configured in an intelligent cockpit. For example, as shown in FIG. 1, displays configured in an intelligent cockpit may not only include a central control display (briefly referred to as a "central control screen" or a "driver screen"), but also include a front passenger display (briefly referred to as a "front passenger screen") and a display disposed in another position, for example, a left rear seat display (briefly referred to as a "left rear screen") and a right rear seat display (briefly referred to as a "right rear screen"). A plurality of displays are configured in the intelligent cockpit, so that the plurality of displays can provide services for a plurality of passengers at the same time. For example, when a driver uses the central control screen for navigation, a front passenger may use the front passenger screen to watch a video. This greatly improves user experience in the cockpit. However, in a current intelligent cockpit, after a user logs in to an account on a screen, another user cannot log in to an account of the another user on another screen. Therefore, a plurality of users cannot simultaneously load data of personal accounts to experience personalized applications. For example, after a driver logs in to a driver account on a central control screen, a front passenger or a rear passenger cannot log in to another account. In addition, in the existing intelligent cockpit, when a logged-in user account in the cockpit is switched, data cannot be shared between a plurality of accounts. In a cross-chip multi-screen scenario, data synchronization cannot be implemented for a same user account. In addition, in the existing intelligent cockpit, a plurality of users cannot simultaneously drag components on a plurality of screens. When a component is dragged on a screen, a drag operation cannot be performed on another screen. In addition, a plurality of screens in the existing intelligent cockpit cannot meet a requirement of using an input method in a time division manner. When a screen is using the input method, the input method encounters an abnormal problem like hiding or an input failure when another screen is operated.

Based on this, embodiments of this application provide a control method, and the method may be applied to an electronic device. According to the method, a plurality of users may log in to different user accounts on different screens, to use personalized data of the users. Embodiments of this application further provide a control method, to implement cross-user data sharing and task continuation in a one-chip multi-screen scenario, and data synchronization for a same user in a cross-chip multi-screen scenario. Embodiments of this application further provide a control method, to simultaneously drag components on a plurality of screens, and use an input method on a plurality of screens. As such, multi-screen user experience is improved.

For example, an electronic device in some embodiments of this application may be a portable device, such as a mobile phone, a tablet computer, a wearable device (for example, a watch, a band, a helmet, or a headset) with a wireless communication function, an in-vehicle terminal device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). Alternatively, the electronic device may be a smart home device (for example, a smart television or a smart speaker), a smart vehicle, a smart robot, a workshop device, a wireless terminal in self-driving (Self-Driving), a wireless terminal in remote surgery (Remote Medical Surgery), a wireless terminal in a smart grid (Smart Grid), a wireless terminal in transportation safety (Transportation Safety), a wireless terminal in a smart city (Smart City), a wireless terminal in a smart home (Smart Home), a flight device (for example, a smart robot, a hot air balloon, an uncrewed aerial vehicle, or an airplane), or the like. In some embodiments of this application, the electronic device may alternatively be understood as a device that can be used to manage an apparatus on a vehicle (including at least a display on the vehicle), for example, an in-vehicle infotainment system, a cockpit system, or a cockpit central control system.

In some embodiments of this application, the electronic device may alternatively be a portable terminal device that further includes another function, for example, a personal digital assistant function and/or a music player function. An example embodiment of the portable terminal device includes but is not limited to a portable terminal device using iOS^{®}, Android^{®}, Microsoft^{®}, or another operating system. Alternatively, the portable terminal device may be another portable terminal device, for example, a laptop computer (Laptop) with a touch-sensitive surface (for example, a touch panel). It should be further understood that in some other embodiments of this application, the electronic device may alternatively be a desktop computer with a touch-sensitive surface (for example, a touch panel), instead of the portable terminal device.

The following describes implementations of embodiments of this application in detail with reference to the accompanying drawings.

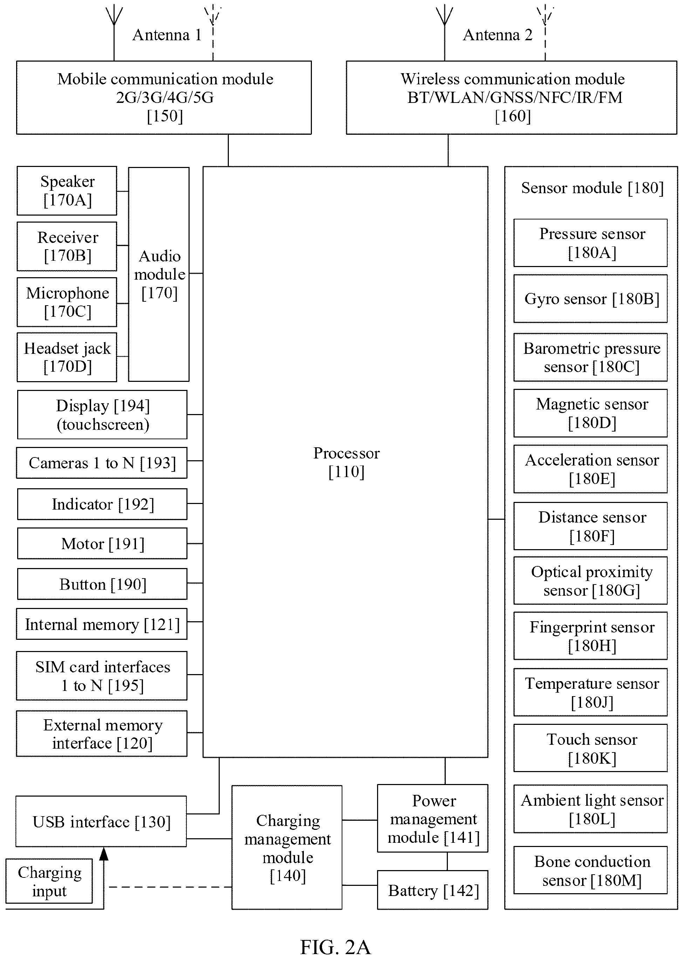

FIG. 2A is a diagram of a structure of an electronic device according to an embodiment of this application. Methods in the following embodiments can be implemented in an electronic device having the foregoing hardware structure.

As shown in FIG. 2A, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a wireless communication module 160, an audio module 170, a speaker 170A, a receiver 170B, a microphone 170C, a headset jack 170D, a sensor module 180, a button 190, a motor 191, an indicator 192, a camera 193, a display 194, and the like. Optionally, the electronic device may further include a mobile communication module 150, a subscriber identification module (subscriber identification module, SIM) card interface 195, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment does not constitute a specific limitation on the electronic device. In some other embodiments, the electronic device may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device. The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The charging management module 140 is configured to receive charging input from a charger. When charging the battery 142, the charging management module 140 may further supply power to the electronic device through the power management module 141. The power management module 141 is configured to connect the battery 142, the charging management module 140, and the processor 110. The power management module 141 may also receive input from the battery 142 to supply power to the electronic device.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device may be configured to cover one or more communication bands. Different antennas may be multiplexed to improve antenna utilization. For example, the antenna 1 may be multiplexed into a diversity antenna of a wireless local area network. In some other embodiments, the antenna may be used in combination with a tuning switch.

When the electronic device includes the mobile communication module 150, the mobile communication module 150 may provide a solution for wireless communication, including 2G/3G/4G/5G and the like, that is applied to the electronic device. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device and that includes a wireless local area network (wireless local area networks, WLAN) (such as a Wi-Fi network), Bluetooth (Bluetooth, BT), a global navigation satellite system (global navigation satellite system, GNSS), frequency modulation (frequency modulation, FM), NFC, an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device implements a display function by using the GPU, the display 194, the application processor, and the like. The GPU is a microprocessor for image processing, and is connected to the display 194 and the application processor. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the electronic device may include one or N displays 194, where N is a positive integer greater than 1.

The electronic device may implement a photographing function by using the ISP, the camera 193, the video codec, the GPU, the display 194, the application processor, and the like. In some embodiments, the electronic device may include one or N cameras 193, where N is a positive integer greater than 1.

The external memory interface 120 may be configured to connect to an external memory card, such as a micro SD card, to extend a storage capability of the electronic device. The external memory card communicates with the processor 110 through the external memory interface 120, to implement a data storage function. For example, files such as music or videos are stored in the external memory card.

The internal memory 121 may be configured to store computer executable program code, where the executable program code includes instructions. The processor 110 performs various function applications and data processing of the electronic device by running the instructions stored in the internal memory 121. The internal memory 121 may include a program storage area and a data storage area. The program storage area may store an operating system, an application program required by at least one function (for example, a sound play function or an image play function), and the like. The data storage area may store data (such as audio data or a phone book) created in a use process of the electronic device. In addition, the internal memory 121 may include a high-speed random access memory, and may further include a non-volatile memory, such as at least one magnetic disk storage component, a flash memory component, and a universal flash storage (universal flash storage, UFS).

The electronic device may implement an audio function, such as music playing and recording, by using the audio module 170, the speaker 170A, the receiver 170B, the microphone 170C, the headset jack 170D, the application processor, and the like.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. When a touch operation is performed on the display 194, the electronic device detects strength of the touch operation through the pressure sensor 180A. The electronic device may also calculate a position of the touch based on a detection signal of the pressure sensor 180A.

The gyro sensor 180B may be configured to determine a motion gesture of the electronic device. The barometric pressure sensor 180C is configured to measure barometric pressure. The magnetic sensor 180D includes a Hall sensor. The electronic device may detect opening and closing of a flip cover by using the magnetic sensor 180D. The acceleration sensor 180E may detect values of acceleration of the electronic device in all directions (usually on three axes). The distance sensor 180F is configured to measure a distance. The electronic device may detect, by using the optical proximity sensor 180G, that a user holds the electronic device close to the ear for a call, to automatically turn off a screen to save power. The optical proximity sensor 180G may also be used in a flip cover mode or a pocket mode to automatically perform screen unlocking or locking. The ambient light sensor 180L is configured to sense ambient light brightness. The fingerprint sensor 180H is configured to collect a fingerprint. The electronic device may implement fingerprint-based unlocking, application lock access, fingerprint-based photographing, fingerprint-based call answering, or the like based on a feature of the collected fingerprint. The temperature sensor 180J is configured to detect a temperature.

The touch sensor 180K is also referred to as a "touch panel". The touch sensor 180K may be disposed on the display 194. The touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. Visual output related to the touch operation may be provided by using the display 194. In some other embodiments, the touch sensor 180K may alternatively be disposed on a surface of the electronic device at a position different from that of the display 194.

The bone conduction sensor 180M may obtain a vibration signal. The button 190 includes a power button, a volume button, and the like. The button 190 may be a mechanical button, or may be a touch button. The motor 191 may generate a vibration prompt. The motor 191 may be used for an incoming call vibration prompt, or may be used for touch vibration feedback. The indicator 192 may be an indicator light, and may indicate a charging status or a power change, or may indicate a message, a missed call, a notification, or the like.

When the electronic device includes the SIM card interface 195, the SIM card interface 195 is configured to connect to a SIM card. The SIM card may be inserted into the SIM card interface 195 or pulled out of the SIM card interface 195, to implement contact with or separation from the electronic device. The electronic device may support one or N SIM card interfaces, and N is a positive integer greater than 1. The electronic device interacts with a network by using a SIM card, to implement functions such as conversation and data communication. In some embodiments, the electronic device uses an eSIM, namely, an embedded SIM card. The eSIM card may be embedded in the electronic device, and cannot be separated from the electronic device.

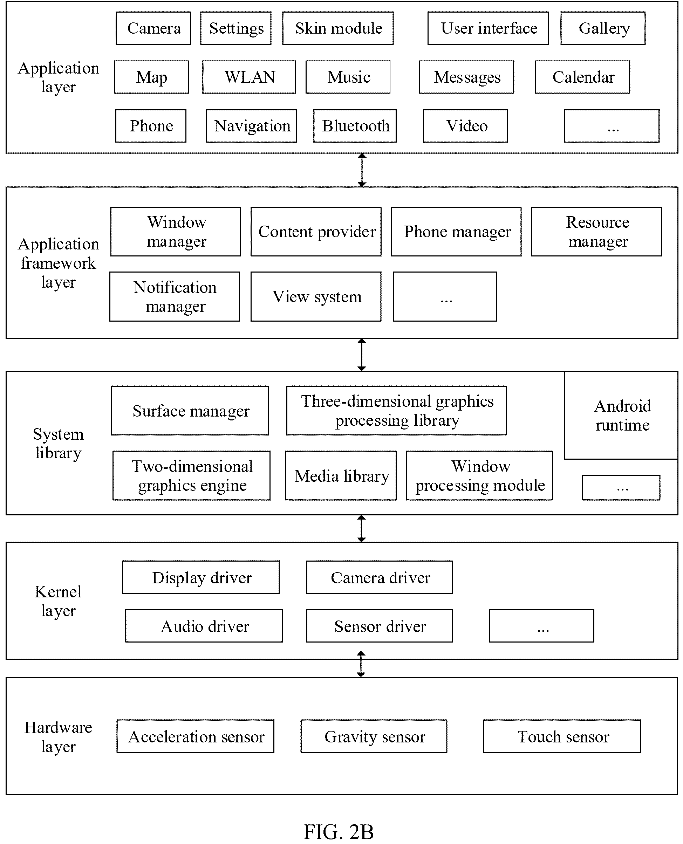

In embodiments of this application, an example in which a software system of the electronic device is an Android system is used to describe a software architecture of the electronic device. FIG. 2B is a diagram of composition of a software architecture of a terminal according to an embodiment of this application.

The software architecture of the electronic device may be a layered architecture. For example, software may be divided into several layers, and each layer has a clear role and task. The layers communicate with each other through a software interface. It is assumed that the electronic device has an Android system, which may include an application layer (app layer for short), an application framework layer (framework layer for short) (framework, FWK), a hardware layer, and the like.

Application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for applications at the application layer. The application framework layer includes some predefined functions. For example, the application framework layer may include a window manager, a content provider, a view system, a phone manager, a resource manager, a notification manager, and the like. The window manager is configured to manage a window program. The window manager may obtain a display size, determine whether there is a status bar, lock a screen, take a screenshot, and the like. The content provider is configured to store and obtain data and make the data accessible to the application. The data may include videos, images, audio, calls that are made and received, browsing history and bookmarks, a phone book, and the like. The view system includes visual controls, such as a text display control and a picture display control. The view system may be configured to construct an application. A display interface may include one or more views. For example, a display interface including an SMS notification icon may include a text display view and a picture display view. The phone manager is configured to provide a communication function of the electronic device 100, for example, call status management (including accepting and declining). The resource manager provides various resources for the application, such as a localized string, an icon, a picture, a layout file, and a video file. The notification manager enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, a prompt tone is made, the electronic device vibrates, and an indicator flashes.

The Android runtime includes a core library and a virtual machine. The Android runtime is responsible for scheduling and management of the Android system. The core library includes two parts: a function that needs to be invoked by using the Java language, and a core library of Android. The application layer and the application framework layer run on the virtual machine. The virtual machine executes a binary file of a Java file at the application layer and the application framework layer. The virtual machine is used to perform functions such as object lifecycle management, stack management, thread management, security and abnormity management, and garbage collection. The system library may include a plurality of functional modules, for example, a surface manager (surface manager), a media library (Media Libraries), a three-dimensional graphics processing library (for example, OpenGL ES), and a 2D graphics engine (for example, SGL). The surface manager is configured to manage a display subsystem and provide fusion of 2D and 3D layers for a plurality of applications. The media library supports playback and recording in a plurality of commonly used audio and video formats, and static image files. The media library may support a plurality of audio and video coding formats, such as MPEG-4, H.264, MP3, AAC, AMR, JPG, and PNG. The three-dimensional graphics processing library is used to implement three-dimensional graphics drawing, image rendering, composition, layer processing, and the like. The 2D graphics engine is a drawing engine for 2D drawing.

In some other embodiments, the system library may further include a window processing module, configured to control processing such as hiding, appearing, reduction, and enlargement of a window. It should be noted that the window processing module may be a module in the system library, or may be a module at another layer, for example, a module at the application framework layer or a kernel layer. This is not limited in embodiments of this application.

The kernel layer is a layer between hardware and software. The kernel layer includes at least a display driver, a camera driver, an audio driver, and a sensor driver.

The method provided in embodiments of this application may be applied to an intelligent cockpit system that uses a one-chip multi-screen mechanism, or may be applied to an intelligent cockpit system that uses a multi-chip multi-screen (or referred to as cross-chip multi-screen) mechanism. The one-chip multi-screen mechanism may be understood as that one chip drives a plurality of displays to perform interaction, and the multi-chip multi-screen mechanism may be understood as that a plurality of chips drive a plurality of displays to perform interaction. In a system using the multi-chip multi-screen mechanism, a plurality of chips may be connected, for example, connected by using a PCIe (peripheral component interconnect express) bus, and the plurality of chips may separately run independent systems.

It may be understood that the method provided in embodiments of this application may also be applied to another system, and is not limited to the intelligent cockpit system. The following describes the method provided in embodiments of this application by using an example in which the electronic device is a head unit. However, this does not constitute a limitation on the solutions protected in this application.

This application provides a control method, to implement multi-user foreground concurrency. The following describes in detail the technical solutions provided in embodiments of this application.

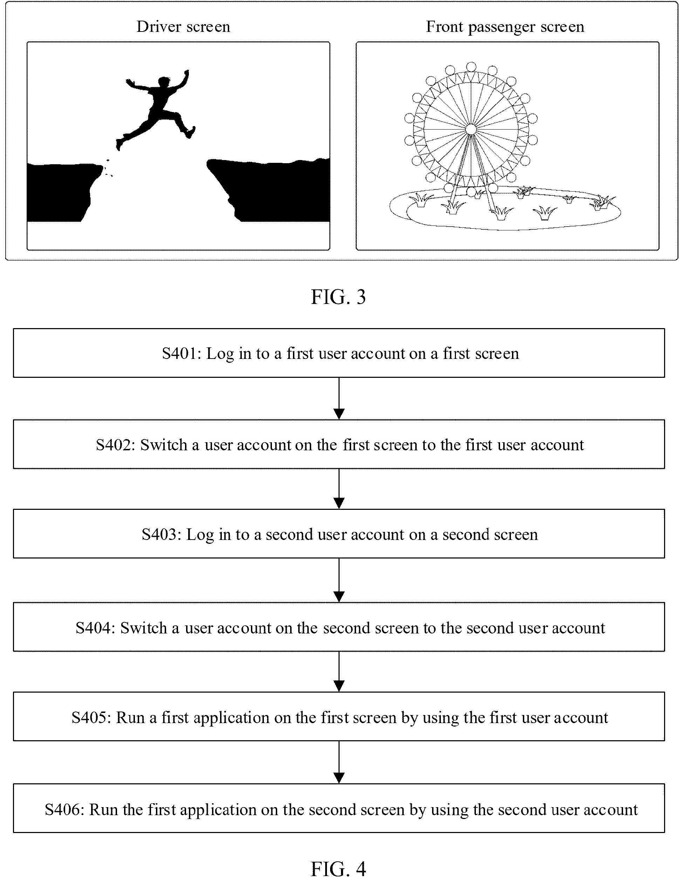

FIG. 3 is a diagram of an interface of a control method according to an embodiment of this application. As shown in FIG. 3, a video application 1 runs on both a driver screen and a front passenger screen in a head unit. In addition, the video application 1 may display different video content on the driver screen and the front passenger screen for a driver and a front passenger to view.

Based on the scenario shown in FIG. 3, the following describes an implementation solution of embodiments of this application in a one-chip multi-screen scenario by using an example of one-chip dual-screen, that is, an example in which one chip controls two displays. For example, a head unit may include at least a first screen and a second screen, and the first screen and the second screen may be controlled by a same chip. As shown in FIG. 4, the method may include but is not limited to the following steps.

S401: Log in to a first user account on the first screen.

In some embodiments, after the head unit is started, two screens (the first screen and the second screen) of an in-vehicle infotainment system may be used for a guest user by default, or may be used for login of different users by default. A user 1 may log in to the first user account on the first screen. For example, the user 1 may log in to the first user account in a manner like entering an account and a password, scanning a code for verification, facial recognition, voiceprint recognition, or the like. A specific account login manner is not limited in this application.

S402: Switch a user account on the first screen to the first user account.

For example, a default account or an original account may be logged in to on the first screen. When the user 1 logs in to the first user account on the first screen, the head unit may switch the account on the first screen to the first user account, and may load seat setting data, application data, personalized data, and the like corresponding to the first user account. For example, the seat setting data may include information related to a position in a cockpit, for example, a seat position and an air conditioning volume.

In some embodiments, when the user 1 logs in to the first user account on the first screen, user account switching may be initiated on the first screen. Optionally, the head unit may determine whether the first user account meets a login condition. For example, the login condition may be that a quantity of foreground user accounts on the current system is less than a threshold, and the first user account is different from a currently logged-in user account (that is, a user account used before switching) on the first screen. When the first user account does not meet the login condition, the user may re-log in to another account. When the first user account meets the login condition, the head unit may store a screen identifier of the first screen, and update the user account on the first screen based on the screen identifier. Specifically, the head unit may update the currently logged-in user account on the first screen to the first user account. For example, the head unit may further freeze the first screen based on the screen identifier of the first screen. For example, freezing the first screen may be understood as: The first screen does not receive an input event or perform an animation, a screenshot is displayed at a top layer, or the like. After the first user account is logged in to on the first screen, the head unit may switch a related system task on the first screen to the first user account, and launch a desktop on the first screen. The system task may be, for example, whether Bluetooth is enabled. In addition, optionally, after the user 1 logs in to the first user account on the first screen, if the user account used before switching is not logged in to on any screen in the head unit, the head unit may exit the user account used before switching, and then a service corresponding to the user account used before switching may be automatically disabled.

For example, the screen identifier may indicate a specific screen in the head unit. The screen identifier may be a screen number (displayID) or a screen name (displayName). For example, the screen identifier of the first screen may be screen 1, and screen 1 indicates the first screen. For another example, when the first screen is a driver screen, the screen identifier of the first screen may be driver screen. A user identifier may indicate a user account. For example, a user identifier of the first user account may be UserID1, that is, UserID1 corresponds to the first user account. The head unit may establish and store a correspondence between a screen identifier and a user identifier. For example, the head unit may establish a hash table (HashMap) that uses a screen identifier as a key (key) and uses a user identifier as a value (value). Further, when the user 1 logs in to the first account on the first screen, the head unit may update the user account on the first screen to the first user account, and establish a correspondence between the user identifier (for example, UserID1) corresponding to the first user account and the screen identifier (for example, screen 1) of the first screen.

It may be understood that when the user switches, logs in to, or exits a user account on a screen of the head unit, the head unit may update the correspondence between a screen identifier and a user identifier. In addition, a user account corresponding to a current screen may be further obtained by using the correspondence. In this way, a relationship between a screen and a user account is managed.

For another example, the head unit may directly establish and store a correspondence between a screen identifier and a user account. For example, the head unit may establish HashMap that uses a screen identifier as a key and uses a user account as a value.

For example, a default account or an original account may also be logged in to on the second screen of the head unit. Optionally, after the user 1 logs in to the first user account on the first screen, an original logged-in account (for example, the default account or the original account) may be maintained on the second screen.

S403: Log in to a second user account on the second screen.

For example, a user 2 may log in to the second user account on the second screen. A manner in which the user 2 logs in to the second user account on the second screen may also include entering an account and a password, scanning a code for verification, facial recognition, voiceprint recognition, or the like. This is not limited in this application.

S404: Switch a user account on the second screen to the second user account.

For example, for a process of switching the user account on the second screen to the second user account, refer to related descriptions of the process of switching the user account on the first screen to the first user account in step S402. Details are not described herein again.

Optionally, after the user 2 logs in to the second user account on the second screen, login of the first user account may still be maintained on the first screen. In other words, that the user 2 logs in to the second user account on the second screen does not affect the user 1 continuing to use the first screen by using the first user account.

S405: Run a first application on the first screen by using the first user account.

For example, as shown in FIG. 3, the user 1 may use a video application (an example of the first application) on the first screen.

S406: Run the first application on the second screen by using the second user account.

For example, as shown in FIG. 4, the user 2 may use the video application on the second screen. Alternatively, the user 2 may use a second application on the second screen. In other words, a same application or different applications may run on the first screen and the second screen.

It may be understood that steps S401 and S403 are not subject to a specific sequence in this application. S401 may be performed before S403, S401 may be performed after S403, or S401 and S403 may be simultaneously performed. Similarly, steps S405 and S406 are not subject to a specific sequence in this application.

In some embodiments, in step S403, the user 2 may alternatively log in to the first user account on the second screen. In other words, a same user account may be logged in to on the first screen and the second screen. This is not limited in this application.

It should be noted that a quantity of screens in the one-chip multi-screen scenario is not limited in this application. For an implementation solution in which there are at least two screens, refer to related descriptions in the foregoing one-chip dual-screen scenario. Details are not described herein again in this application.

In the foregoing embodiment, a same user account or different user accounts may be logged in to on different screens of the head unit. Optionally, a logged-in user account on the head unit may be a default logged-in user account, or may be a user account subsequently logged in to by the user. For example, the default account may be logged in to on the first screen, and the default account may also be logged in to on the second screen. For another example, the first user account may be logged in to on the first screen, and the default account may be logged in to on the second screen. For another example, the first user account may be logged in to on the first screen, and the second user account may be logged in to on the second screen. In this embodiment of this application, a same account or different accounts are logged in to on different screens. When a same application runs on different screens, the same application can be started and used on the different screens at the same time, so that use requirements of a user in a plurality of scenarios in a cockpit are met, and user experience is improved.

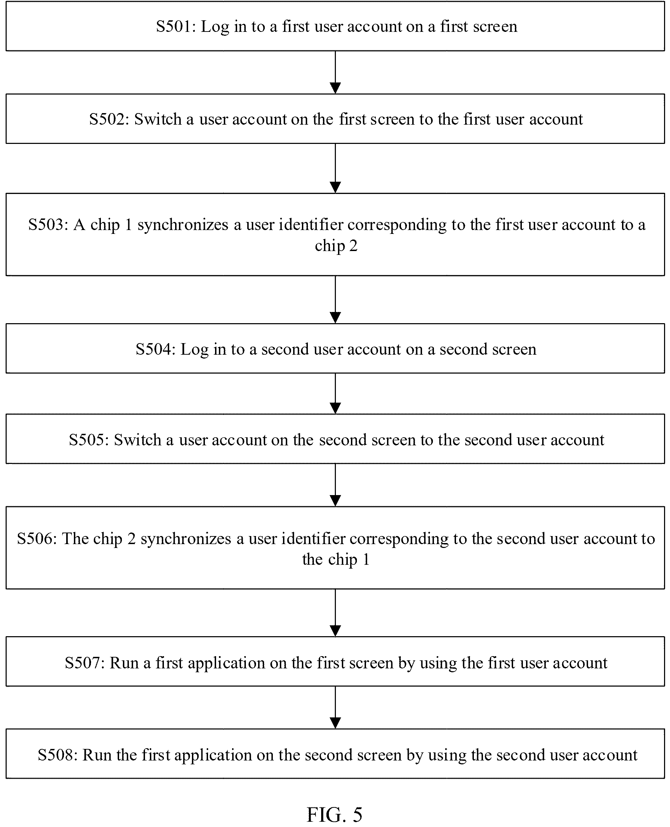

Based on the scenario shown in FIG. 3, the following describes an implementation solution of embodiments of this application in a cross-chip multi-screen scenario by using an example of cross-chip dual-screen, that is, an example in which two chips respectively control two displays. For example, a head unit may include at least a first screen and a second screen, and the first screen and the second screen may be respectively controlled by a chip 1 and a chip 2 in the head unit. As shown in FIG. 5, the method may include but is not limited to the following steps.

S501: Log in to a first user account on the first screen.

S502: Switch a user account on the first screen to the first user account.

For example, a user 1 may log in to the first user account on the first screen controlled by the chip 1. For a specific process of logging in to the first user account on the first screen, refer to related descriptions in step S401. For a specific process of switching the user account on the first screen to the first user account, refer to related descriptions in step S402. Details are not described herein again.

S503: The chip 1 synchronizes a user identifier corresponding to the first user account to the chip 2.

For example, the user identifier corresponding to the first user account may be UserID1, and the chip 1 may synchronize UserID1 to the chip 2.

That the chip 1 synchronizes UserID1 to the chip 2 may also be understood as that the chip 1 sends or transmits UserID1 to the chip 2. In a possible implementation, when a system is started, the chip 1 and the chip 2 each may create a synchronization service for synchronizing a user identifier. The chip 1 may synchronize the user identifier to the chip 2 by using the synchronization service. The synchronization service may be a system service. For example, a user-running system service without a foreground interface may be set in each of the chip 1 and the chip 2. For example, a user identifier of a user running the system service may be UserID0. In another possible implementation, the chip 1 and the chip 2 may implement data sharing in a storage sharing manner.

S504: Log in to a second user account on the second screen.

S505: Switch a user account on the second screen to the second user account.

For example, a user 2 may log in to the second user account on the second screen controlled by the chip 2. For a specific process of logging in to the second user account on the second screen, refer to related descriptions in step S403. For a specific process of switching the user account on the second screen to the second user account, refer to related descriptions in step S404. Details are not described herein again.

S506: The chip 2 synchronizes a user identifier corresponding to the second user account to the chip 1.

For example, the user identifier corresponding to the second user account may be UserID2, and the chip 2 may synchronize UserID2 to the chip 1. Similarly, the chip 2 may also synchronize the user identifier to the chip 1 by using the synchronization service.

S507: Run a first application on the first screen by using the first user account.

For example, as shown in FIG. 3, the user 1 may use a video application on the first screen.

S508: Run the first application on the second screen by using the second user account.

For example, as shown in FIG. 3, the user 2 may use the video application on the second screen. Alternatively, the user 2 may use a second application on the second screen. In other words, a same application or different applications may run on the first screen and the second screen.

It may be understood that steps S501 and S504 are not subject to a specific sequence in this application. S501 may be performed before S504, S501 may be performed after S504, or S501 and S504 may be simultaneously performed. Similarly, steps S507 and S508 are not subject to a specific sequence in this application.

In some embodiments, in step S504, the user 2 may alternatively log in to the first user account on the second screen. In other words, a same user account or different user accounts may be logged in to on the first screen and the second screen. In addition, a same application or different applications may run on the first screen and the second screen. This is not limited in this application.

It should be noted that a quantity of screens in the cross-chip multi-screen scenario is not limited in this application. For an implementation solution in which there are at least two screens, refer to related descriptions in the foregoing cross-chip dual-screen scenario. Details are not described herein again in this application.

In the foregoing embodiment, when a logged-in user account on a screen of a chip changes, an updated user account may be synchronized to another chip. In this way, detection on mutual exclusion for a same user can be implemented, detection for a uniform specification such as a maximum quantity of users can be performed, and the like.

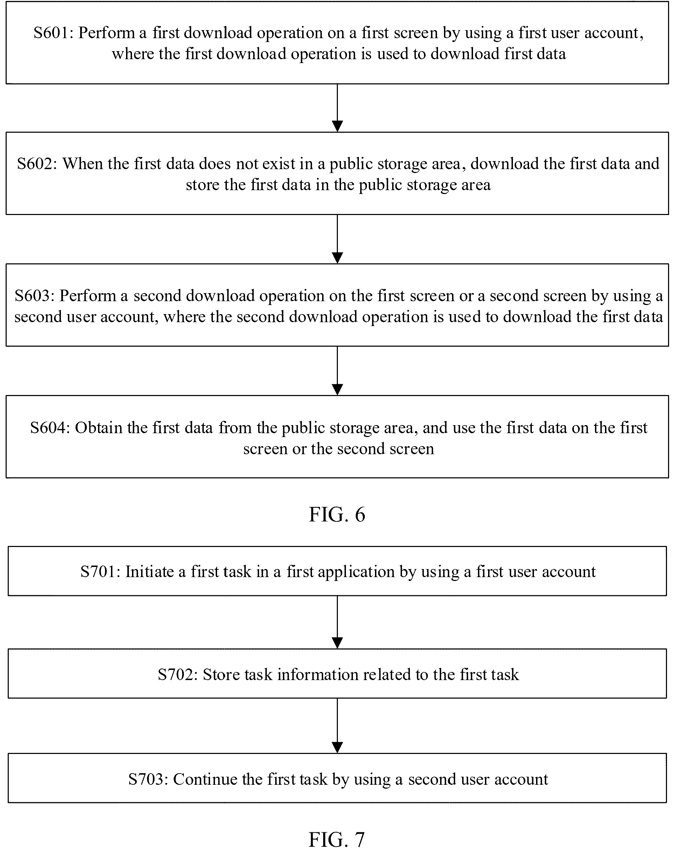

This application further provides a control method, to implement data sharing between different users. The following describes in detail the technical solutions provided in embodiments of this application. As shown in FIG. 6, the method may include but is not limited to the following steps.

S601: Perform a first download operation on a first screen by using a first user account, where the first download operation is used to download first data.

The first data may be an application, or may be application-related data. For example, the first data may be an offline map in a map application, a song in a music application, a video in a video application, a photo in Gallery, and the like. For example, after logging in to the first user account on the first screen, a user 1 may use a map application on the first screen, and download an offline map 1.

S602: When the first data does not exist in a public storage area, download the first data and store the first data in the public storage area.

For example, when a head unit is started, a system service for managing cross-user public data (briefly referred to as a "system service 1" below) may be created, the public storage area may be created, and interfaces for storing, querying, and obtaining public data may be opened to an application layer, to provide a background sharing capability for the public data. For example, a user-running system service without a foreground interface may be set in the head unit. For example, a user identifier of a user running the system service may be UserID0.

For example, when the user 1 downloads the offline map 1 on the first screen by using the first user account, the map application may invoke the query interface of the system service 1, to determine whether the offline map 1 already exists in the public storage area. When the offline map 1 does not exist in the public storage area, the head unit may download the offline map 1, and store the offline map 1 in the public storage area by invoking the storage interface of the system service 1. It may be understood that, when the offline map 1 already exists in the public storage area, the user 1 may directly use the offline map 1 on the first screen without downloading the offline map 1.

S603: Perform a second download operation on the first screen or a second screen by using a second user account, where the second download operation is used to download the first data.

In a possible implementation, based on the description in the embodiment shown in FIG. 4, different user accounts may be logged in to on different screens of the head unit. Therefore, a user 2 may log in to the second user account on the second screen, and use, on the second screen, an application that is the same as that on the first screen. For example, the user 2 may use the map application on the second screen, and download the offline map 1.

In another possible implementation, the user 2 may alternatively log in to the second user account on the first screen, and use, on the first screen, an application that is the same as that on the first screen. For example, the user 2 may use the map application on the first screen, and download the offline map 1. In this case, the originally logged-in first user account on the first screen may be logged out.

S604: Obtain the first data from the public storage area, and use the first data on the first screen or the second screen.

Similarly, the map application may determine, by invoking the query interface of the system service 1, whether the offline map 1 already exists in the public storage area. When the offline map 1 already exists in the public storage area, the offline map 1 may be read by invoking the obtaining interface of the system service 1. Further, when the user 2 performs the second download operation on the first screen by using the second user account, the user 2 may directly use the offline map 1 on the first screen. When the user 2 performs the second download operation on the second screen by using the second user account, the user 2 may directly use the offline map 1 on the second screen.

In the foregoing embodiment, a user may log in to different user accounts on different screens of a head unit and use public data, or a user may log in to different user accounts on a same screen of a head unit and use public data. In addition, a quantity of user accounts sharing the public data is not limited in this application. In this embodiment, the system service for managing the cross-user public data in an in-vehicle infotainment system may provide a system-level data sharing capability, and open the data storage, query, and obtaining interfaces to the application layer, to implement data sharing between a plurality of users.

In an existing scenario, when a driver 1 and a driver 2 drive in turn and respectively log in to user accounts of the drivers, a navigation task needs to be re-initiated, and user operations are relatively complex. Based on this, this application further provides a control method, to implement task continuation between different users. The following describes in detail the technical solutions provided in embodiments of this application. As shown in FIG. 7, the method may include but is not limited to the following steps.

S701: Initiate a first task in a first application by using a first user account.

For example, after logging in to the first user account on a first screen, a user 1 may initiate the first task in the first application by using the first user account. The first application may be a third-party application installed in a head unit, or may be a system application of a head unit. A type of the first application is not limited in this application. For example, the first application may be a map application, and the user 1 may initiate a navigation task in the map application by using the first user account. In this case, the first task is a navigation task.

S702: Store task information related to the first task.

For example, when the head unit is started, a system service for data proxy between users (briefly referred to as a "system service 2" below) may be created, and interfaces for data storage, continuation, deletion, and the like may be opened to an application layer. For example, a user-running system service without a foreground interface may be set in the head unit. For example, a user identifier of a user running the system service may be UserID0.

For example, when the user 1 initiates, on the first screen, the navigation task in the map application by using the first user account, the map application may store task information related to the navigation task by invoking the storage interface of the system service 2. The task information related to the navigation task is, for example, a destination, a transit point, a map application name, and a navigation start time. Further, the system service 2 may create a to-be-continued navigation task record, and store the task information related to the navigation task.

Optionally, after the user 1 initiates the first task by using the first user account, the first task may further be exited. When the first task is exited, the first application may invoke the deletion interface of the system service 2 to delete the to-be-continued first task. For example, after the user 1 ends navigation to exit the navigation task, the map application may invoke the deletion interface of the system service 2 to delete the to-be-continued navigation task.

S703: Continue the first task by using a second user account.

For example, after a user 2 logs in to the second user account on the first screen, a user account on the first screen is switched from the first user account to the second user account. In this case, the second user account may be used to continue the first task. Specifically, after the user account is switched, continuation of the first task (for example, the navigation task) may be initiated by invoking the continuation interface of the system service 2.

Optionally, in step S703, when a continuation condition corresponding to the first task is met, the second user account may be used to continue the first task. Using the navigation task as an example, the continuation condition may be that an interval between a current time and the navigation start time is less than a first time threshold, and a distance between a current position and the destination is greater than a first distance threshold. The continuation condition may be preset by a system, or may be set by a user. The continuation condition of the first task is not limited in this application.

In the foregoing embodiment, task continuation can be implemented between different user accounts. For example, in a driving scenario, after a driver is changed, tasks such as navigation and music can be continued, thereby improving user experience. It may be understood that a quantity of user accounts for implementing task continuation is not limited in this application.

In addition, in the foregoing embodiment, an example in which the user 1 and the user 2 log in to different user accounts on a same screen (that is, the first screen) to implement task continuation is used for description. In some other embodiments, different users may alternatively log in to different user accounts on different screens to implement task continuation. Details are not described herein in this application.

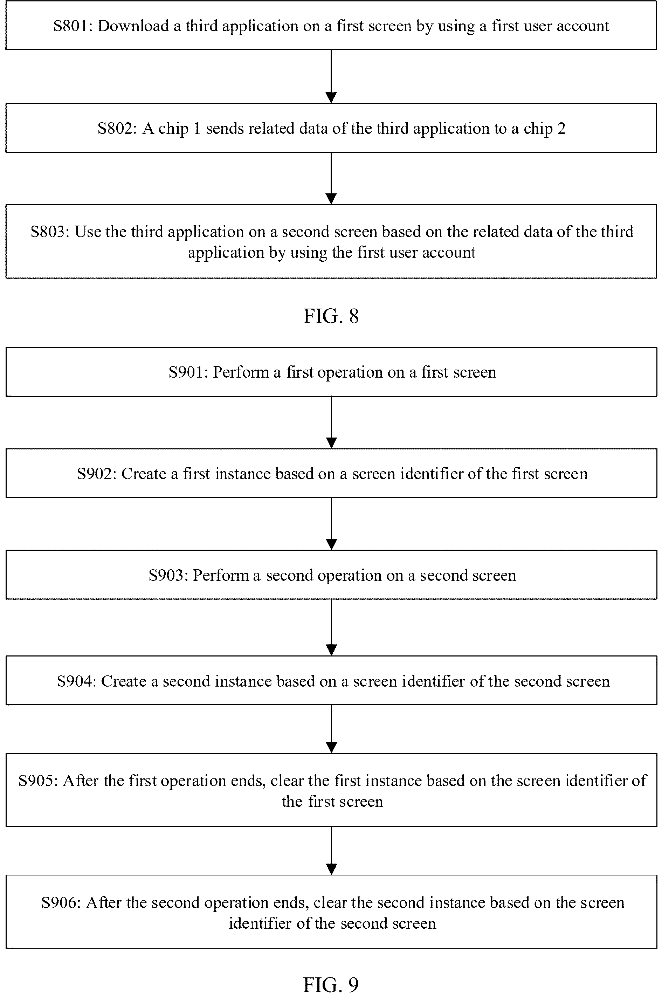

In a cockpit scenario, a user may further need to change a seat. In a cross-chip multi-screen scenario, after a user changes a seat, if displays corresponding to seats used before and after the seat change are controlled by different chips, the user cannot use previous application data after logging in to a user account of the user. This affects user experience. Based on this, this application further provides a control method, to implement data synchronization for a same user in a cross-chip multi-screen scenario. The following describes an implementation solution of embodiments of this application in a cross-chip multi-screen scenario by using an example of cross-chip dual-screen, that is, an example in which two chips respectively control two displays. For example, a head unit may include at least a first screen and a second screen, and the first screen and the second screen may be respectively controlled by a chip 1 and a chip 2 in the head unit. As shown in FIG. 8, the method may include but is not limited to the following steps.

S801: Download a third application on the first screen by using a first user account.

For example, after logging in to the first user account on the first screen, a user 1 may download and install the third application on the first screen, and use the third application. The third application may be, for example, a video application or a music application.

S802: The chip 1 synchronizes related data of the third application to the chip 2.

For example, the related data of the third application may be an application icon, an installation package, specific application data, or the like.

In a possible implementation, when systems of the chip 1 and the chip 2 are started, system services for same-user synchronization data management may be separately created, a storage area of synchronization data may be created, and interfaces for storing, querying, and obtaining the synchronization data may be opened to an application layer, to provide a system-level synchronization capability. For example, a user-running system service without a foreground interface may be set in each of the chip 1 and the chip 2. For example, a user identifier of a user running the system service may be UserID0. Further, the related data of the third application may be synchronized from a system service for same-user synchronization data management in the chip 1 to a system service for same-user synchronization data management in the chip 2. Optionally, the chip 1 and the chip 2 may be connected by using a PCIe bus.

In another possible implementation, the chip 1 and the chip 2 may synchronize data in a storage sharing manner. In this way, the chip 1 and the chip 2 may use same data.

S803: Use the third application on the second screen based on the related data of the first user by using the first user account.

For example, an icon corresponding to the third application may be displayed on the second screen. When the related data of the third application is an application icon, the user 1 may tap the icon of the third application on the second screen, to download and install the third application, and use the third application. When the related data of the third application is an installation package of the third application, the user 1 may tap an icon of the third application on the second screen, to install and use the third application. When the related data of the third application is specific application data of the third application, if the first user account is logged in to on the second screen, when the user 1 taps an icon of the third application on the second screen, the first user account may be automatically logged in to in the third application on the second screen, and the third application may be used.

It should be noted that a quantity of screens in the cross-chip multi-screen scenario is not limited in this application. For an implementation solution in which there are at least two screens, refer to related descriptions in the foregoing cross-chip dual-screen scenario. Details are not described herein again in this application.

In the embodiment shown in FIG. 8, an example in which application data is synchronized in a cross-chip system is used for description. In some other embodiments, other data may also be synchronized between cross-chip systems, for example, setting information (such as a vehicle control setting, a wallpaper/theme setting, and an application permission setting) may be synchronized. A type of synchronized data is not limited in this application.

In the foregoing embodiment, when a user uses screens corresponding to different chips, data synchronization in a cross-chip system can be implemented, and the user can use same data on the screens corresponding to the different chips, thereby improving user experience.

To further improve user experience in a multi-screen scenario in a cockpit, this application further provides a control method, to implement simultaneous dragging on a plurality of screens. The following describes in detail the technical solutions provided in embodiments of this application.

The following describes an implementation solution of embodiments of this application in a one-chip multi-screen scenario by using an example of one-chip dual-screen, that is, an example in which one chip controls two displays. For example, a head unit may include at least a first screen and a second screen, and the first screen and the second screen may be controlled by a same chip. As shown in FIG. 9, the method may include but is not limited to the following steps.

S901: Perform a first operation on the first screen.

For example, the first operation may include but is not limited to a slide operation, a tap operation, a drag operation, or the like on the first screen. The first operation may be input by touching the first screen by a user, or may be input by using a peripheral (like a mouse, an air mouse, or a keyboard) connected to the first screen.

For example, a user 1 may perform a drag operation on a first component on the first screen. The first component may be any component that is on the first screen and that supports dragging.

S902: Create a first instance based on a screen identifier of the first screen.

For example, the screen identifier may indicate a specific screen in the head unit, and the screen identifier may be a screen number or a screen name. When the user 1 performs the first operation on the first screen, the head unit may create, based on the screen identifier of the first screen, the first instance related to the first operation. Optionally, the head unit may store a correspondence between the screen identifier of the first screen and the first instance. For example, the head unit may store the screen identifier of the first screen and the first instance in HashMap. For example, the first operation is a drag operation. An entire process of the drag operation may be divided into four steps: started, being continued, stopped, and ended. All processing processes related to the drag operation may be performed based on the first instance.

S903: Perform a second operation on the second screen.

For example, the second operation may include but is not limited to a slide operation, a tap operation, a drag operation, or the like on the first screen. The second operation may be the same as or different from the first operation. For example, both the first operation and the second operation may be drag operations, and a user 2 may perform a drag operation on a second component on the second screen. The second component may be any component that is on the second screen and that supports dragging. For another example, the first operation may be a slide operation, and the second operation may be a drag operation.

S904: Create a second instance based on a screen identifier of the second screen.

For example, when the user 2 performs the second operation on the second screen, the head unit may create, based on the screen identifier of the second screen, the second instance related to the second operation. Optionally, the head unit may store a correspondence between the screen identifier of the second screen and the second instance. For example, the head unit may store the screen identifier of the second screen and the second instance in HashMap.

S905: After the first operation ends, clear the first instance based on the screen identifier of the first screen.

For example, after the first operation of the user 1 on the first screen ends, the head unit may clear, based on the screen identifier of the first screen, the first instance corresponding to the screen identifier of the first screen. For example, when the first operation is a drag operation, the head unit may clear the first instance after the drag operation ends.

S906: After the second operation ends, clear the second instance based on the screen identifier of the second screen.

For example, after the second operation of the user 2 on the second screen ends, the head unit may clear, based on the screen identifier of the second screen, the second instance corresponding to the screen identifier of the second screen.

In some embodiments, the first operation and the second operation may be performed simultaneously, or the first operation and the second operation may have an overlapping time. For example, an execution time period of the first operation is t1 to t3, and an execution time period of the second operation is t2 to t4, where t1<t2<t3<t4. Certainly, the first operation and the second operation may alternatively be performed in sequence.

It may be understood that steps S901 and S903 are not subject to a specific sequence in this application. S901 may be performed before S903, S901 may be performed after S903, or S901 and S903 may be simultaneously performed. Similarly, steps S905 and S906 are not subject to a specific sequence in this application.

It should be noted that a quantity of screens in the one-chip multi-screen scenario is not limited in this application. For an implementation solution in which there are at least two screens, refer to related descriptions in the foregoing one-chip dual-screen scenario. Details are not described herein again in this application.

In the foregoing embodiment, when the user 1 operates the first screen on the first screen, the user 2 may simultaneously operate the second screen on the second screen. Therefore, a plurality of users can simultaneously operate a plurality of screens, thereby improving user experience.

Currently, in a multi-screen scenario in a cockpit, an input method cannot be directly switched between two screens. For example, when a driver enters a navigation address on a central control screen by using an input method, if a front passenger needs to enter content on a front passenger screen, the input method cannot be switched from the central control screen to the front passenger screen, affecting user experience of using the input method. Therefore, this application further provides a control method, to implement multi-focus input on a plurality of screens.

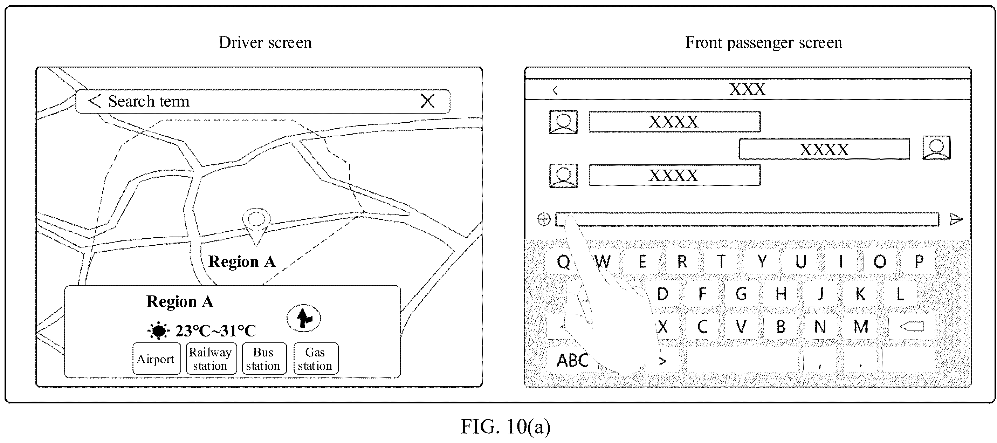

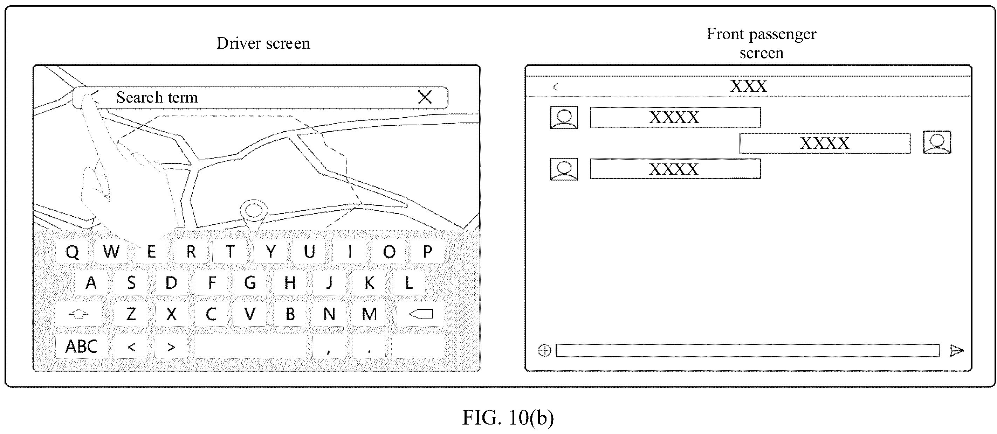

FIG. 10(a) and FIG. 10(b) are a diagram of a control method according to an embodiment of this application. As shown in FIG. 10(a), a driver screen in a head unit displays a navigation interface, and a front passenger screen displays a chat interface. When a front passenger taps an input box of the chat interface displayed on the front passenger screen, the chat interface of the front passenger screen displays a virtual keyboard. For example, as shown in FIG. 10(b), when a driver taps an input box of a navigation interface displayed on a driver screen, the navigation interface of the driver screen displays a virtual keyboard. The virtual keyboard can be switched between the driver and the front passenger.

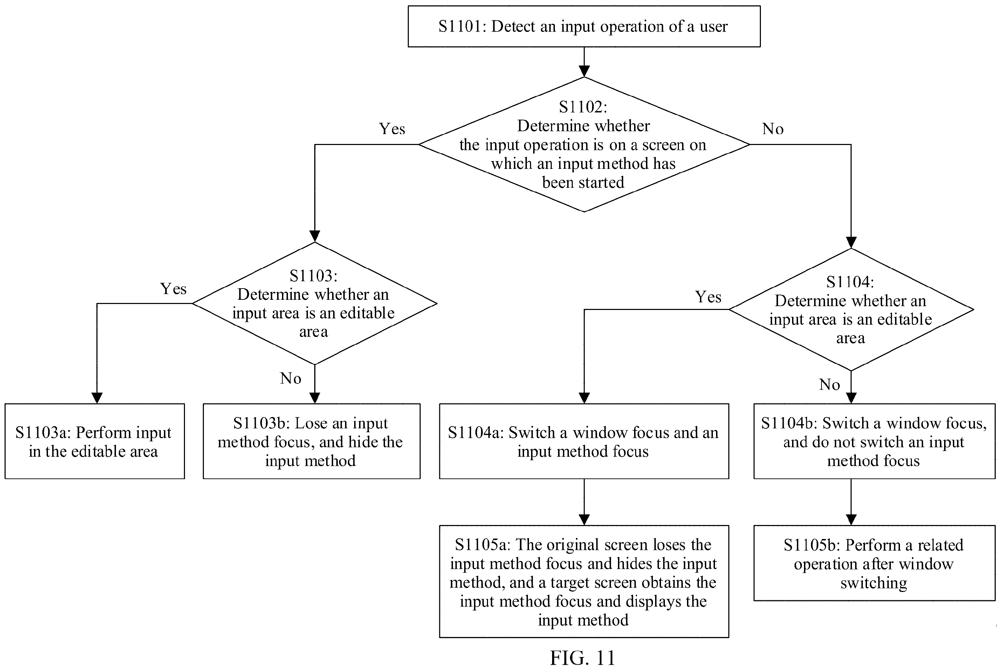

Based on the scenario shown in FIG. 10(a) and FIG. 10(b), when a user performs an operation on a screen of a head unit, a determining procedure shown in FIG. 11 may be performed. For example, as shown in FIG. 11, the method may include but is not limited to the following steps.

S1101: The head unit detects an input operation of the user.

For example, the input operation of the user may be an input operation on any screen of the head unit. The user may perform the input operation by using an input device like a mouse, a touchpad, or a touchscreen. For example, when the user performs the input operation by using the touchscreen, the input operation may be a touchscreen gesture operation (for example, a tap operation).

S1102: The head unit determines whether the input operation is on a screen on which an input method is started.

When the input operation is on the screen on which the input method is started, step S1103 and a branch thereof are performed; or when the input operation is not on the screen on which the input method is started, step S1104 and a branch thereof are performed.

S1103: Determine whether an input area of the input operation is an editable area.

When the input area of the input operation is an editable area, step S1103a is performed: Perform input in the editable area. When the input area of the input operation is a non-editable area, step S1103b is performed: The screen on which the input method is started loses an input method focus, and the input method is hidden or not displayed.

S1104: Determine whether an input area of the input method is an editable area.

When the input area of the input operation is an editable area, step S1104a is performed: Switch a window focus and an input method focus. Specifically, when the input operation is not on the screen on which the input method is started, the screen on which the input method is started may be referred to as an original screen, and a screen on which the input operation is performed may be referred to as a target screen. In this case, the window focus and the input method focus may be switched from the original screen to the target screen. Further, after step 1104a, the method may further include step S1105a: The original screen loses the input method focus and hides the input method, and the target screen obtains the input method focus and displays the input method.

When the input area of the input operation is a non-editable area, step S1104b is performed: Switch a window focus and do not switch an input method focus. Specifically, the window focus may be switched from the original screen to the target screen, and the input method focus is still maintained on the original screen. Further, after step S1104b, the method may further include step S1105b: Perform, on the target screen, a related operation after window switching.

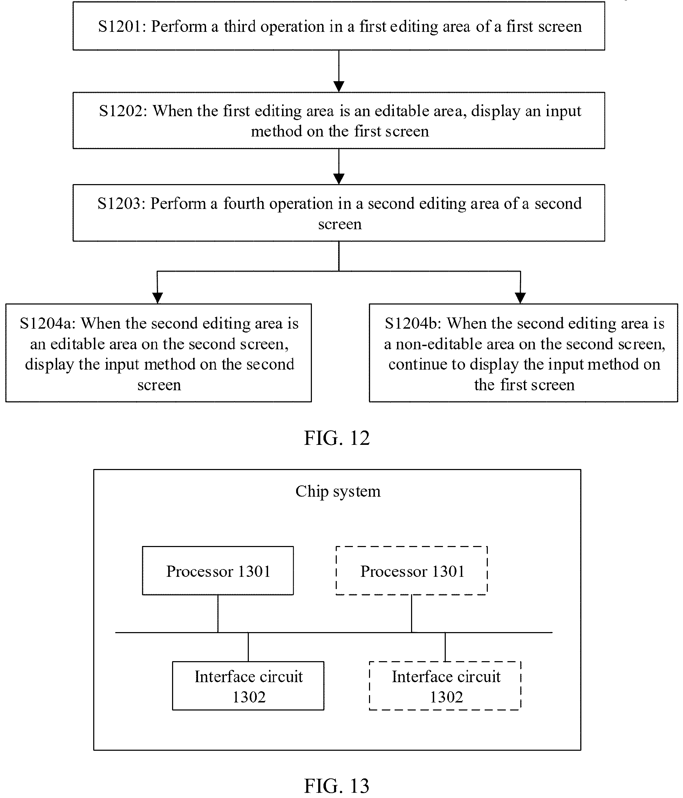

Based on the scenario shown in FIG. 10(a) and FIG. 10(b), the following describes an implementation solution of embodiments of this application in a one-chip multi-screen scenario by using an example of one-chip dual-screen, that is, an example in which one chip controls two displays. For example, a head unit may include at least a first screen and a second screen, and the first screen and the second screen may be controlled by a same chip. As shown in FIG. 12, the method may include but is not limited to the following steps.

S1201: Perform a third operation in a first editing area of the first screen.

The third operation may be, for example, a tap operation of a user 1 in the first editing area. For example, the first editing area may be an editable area on the first screen. For example, the first editing area may be an input box. For example, the first editing area may be a text view (TextView) or web view (WebView) instance. The first editing area may alternatively be a non-editable area on the first screen.

S1202: When the first editing area is an editable area, display an input method on the first screen.

For example, when the first editing area is an editable area, after the first editing area is tapped on the first screen, the first editing area on the first screen may obtain an input method focus and display the input method. In addition, the head unit may store a screen identifier of the first screen on which the input method is started.

A specific manner of displaying the input method on the screen is not limited in this application. For example, the head unit may display the input method in a form of the virtual keyboard shown in FIG. 10(a) and FIG. 10(b), or may display the input method in another form.

For another example, in step S1202, when the first editing area is a non-editable area, after the user 1 taps the first editing area on the first screen, if a virtual keyboard is already started on the first screen, as shown in step S1103b, an original input method focus on the first screen disappears, and the originally displayed virtual keyboard is hidden. If the virtual keyboard is not started on the first screen originally, as shown in step S1104b, the first screen obtains a window focus, but does not obtain the input method focus, and the input method is still not displayed on the first screen.

S1203: Perform a fourth operation in a second editing area of the second screen.

The fourth operation may be, for example, a tap operation of a user 2 in the second editing area. For example, the second editing area may be an editable area on the second screen, for example, an input box, or the second editing area may be a non-editable area on the second screen. Further, as shown in FIG. 11, step S1204a or step S1204b may be performed based on a type of the second editing area.

S1204a: When the second editing area is an editable area on the second screen, display the input method on the second screen.

For example, because the input method is already displayed on the first screen, the fourth operation is not performed on the screen on which the input method is started. Therefore, as shown in step S1104a, when the second editing area is an editable area on the second screen, the input method focus on the first screen is switched onto the second screen. The input method focus is lost and the input method is hidden on the first screen, and the input method focus is obtained and the input method is displayed on the second screen. For example, as shown in FIG. 10(b), when a driver taps an input box of a navigation interface displayed on a driver screen (an example of the second screen), the navigation interface of the driver screen displays a virtual keyboard, and a virtual keyboard on a front passenger screen (an example of the first screen) disappears.

S1204b: When the second editing area is a non-editable area on the second screen, continue to display the input method on the first screen.

For example, as shown in step S1102 in FIG. 11, the fourth operation is not performed on the screen (the first screen) on which the input method is started, and the second editing area is a non-editable area on the second screen. Therefore, as shown in step S1104b, only the window focus may be switched onto the second screen, and the input method focus is still on the first screen. In other words, in this case, the fourth operation performed by the user 2 on the second screen does not affect the input method focus, the input method may continue to be displayed on the first screen, and the user 1 may continue to use the input method on the first screen.

It should be noted that a quantity of screens in the one-chip multi-screen scenario is not limited in this application. For an implementation solution in which there are at least two screens, refer to related descriptions in the foregoing one-chip dual-screen scenario. Details are not described herein again in this application.

According to the method in the foregoing embodiment, the input method can be used on a plurality of screens of the head unit in a time division manner, and the input method focus can be flexibly switched, thereby improving user experience of using the input method on the head unit.

An embodiment of this application further provides a control apparatus. The apparatus may be used in an electronic device, for example, the electronic device (for example, the head unit) in the foregoing embodiments. The apparatus may include a processor, and a memory configured to store instructions executable by the processor. When the processor is configured to execute the instructions, the display apparatus is enabled to implement functions or steps performed by the electronic device (for example, the head unit) in the foregoing method embodiments.

An embodiment of this application further provides an electronic device (the electronic device may be an electronic device, for example, may be the head unit in the foregoing embodiments). The electronic device may include a memory and one or more processors. The memory is coupled to the processor. The memory is configured to store computer program code, and the computer program code includes computer instructions. When the processor executes the computer instructions, the electronic device may perform functions or steps performed by the electronic device (for example, the head unit) in the foregoing method embodiments. Certainly, the electronic device includes but is not limited to the memory and the one or more processors. For example, for a structure of the electronic device, refer to the structures shown in FIG. 2A and FIG. 2B.

An embodiment of this application further provides a chip system. The chip system may be used in an electronic device, for example, the electronic device (for example, the head unit) in the foregoing embodiments. As shown in FIG. 13, the chip system includes at least one processor 1301 and at least one interface circuit 1302. The processor 1301 may be a processor in the foregoing electronic device. The processor 1301 and the interface circuit 1302 may be interconnected through a line. The processor 1301 may receive computer instructions from a memory of the electronic device through the interface circuit 1302, and execute the computer instructions. When the computer instructions are executed by the processor 1301, the electronic device may be enabled to perform steps performed by the head unit in the foregoing embodiments. Certainly, the chip system may further include another discrete component. This is not specifically limited in this embodiment of this application.

An embodiment of this application further provides a computer-readable storage medium, configured to store computer instructions run by an electronic device, for example, the foregoing electronic device (for example, the head unit).

An embodiment of this application further provides a computer program product, including computer instructions run by an electronic device, for example, the foregoing electronic device (for example, the head unit).

It may be clearly learned by a person skilled in the art from the foregoing description of the implementations that, for convenience and brevity of description, division into only the foregoing functional modules is used as an example for description. In actual application, the foregoing functions may be allocated to different functional modules for implementation according to a requirement, that is, an internal structure of an apparatus is divided into different functional modules, to complete all or some of the functions described above.

In the several embodiments provided in this application, it should be understood that the disclosed apparatus and method may be implemented in other manners. For example, the described apparatus embodiments are merely examples. For example, division into the modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may be one or more physical units, may be located in one place, or may be distributed in a plurality of different places. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application. However, the protection scope of this application is not limited thereto. Any change or replacement within the technical scope disclosed in this application shall fall within the protection scope of this application. Therefore, the protection scope of this application shall be subject to the protection scope of the claims.

## Claims

1. A control method, wherein the method is applied to an electronic device, the electronic device comprises a first screen and a second screen, and the method comprises:
after a first user account is logged in to on the first screen, switching a user account on the first screen to the first user account;
after a second user account is logged in to on the second screen, switching a user account on the second screen to the second user account; and
running a first application on the first screen by using the first user account, and running the first application on the second screen by using the second user account.

2. The method according to claim 1, wherein after the switching a user account on the first screen to the first user account, the method further comprises: storing a correspondence between a screen identifier of the first screen and a user identifier of the first user account; and
after the switching a user account on the second screen to the second user account, the method further comprises: storing a correspondence between a screen identifier of the second screen and a user identifier of the second user account.

3. The method according to claim 1, wherein the method further comprises:
detecting that a first download operation is performed on the first screen by using the first user account, and storing the first data in a first storage area, wherein the first download operation is used to download the first data.

4. The method according to claim 3, wherein the method further comprises:
detecting that a second download operation is performed on the first screen by using the second user account, obtaining the first data from the first storage area, and using the first data on the first screen; or
detecting that a second download operation is performed on the second screen by using the second user account, obtaining the first data from the first storage area, and using the first data on the second screen, wherein
the second download operation is used to download the first data.

5. The method according to any one of claims 1 to 4, wherein after the first user account is logged in to on the first screen, the method further comprises:
initiating, on the first screen, a first task in the first application by using the first user account;
storing task information of the first task;
logging in to the second user account on the first screen; and
continuing the first task on the first screen based on the task information of the first task by using the second user account.

6. The method according to any one of claims 1 to 5, wherein the method further comprises:
detecting a first operation on the first screen, and creating a first instance based on the screen identifier of the first screen;
detecting a second operation on the second screen, and creating a second instance based on the screen identifier of the second screen;
detecting that the first operation ends, and clearing the first instance based on the screen identifier of the first screen; and
detecting that the second operation ends, and clearing the second instance based on the screen identifier of the second screen.

7. The method according to claim 6, wherein an operation time of the first operation is the same as that of the second operation, or an operation time of the first operation overlaps that of the second operation.

8. The method according to any one of claims 1 to 7, wherein the method further comprises:
detecting that a third operation is performed in a first editing area of the first screen;
when the first editing area is an editable area, displaying an input method on the first screen;
detecting that a fourth operation is performed in a second editing area of the second screen; and
when the second editing area is an editable area, displaying the input method on the second screen.

9. The method according to claim 8, wherein the method further comprises:
when the second editing area is a non-editable area, continuing to display the input method on the first screen.

10. The method according to claim 9, wherein a window focus is switched onto the second screen.

11. A control method, wherein the method is applied to a system comprising a first electronic device and a second electronic device, the first electronic device comprises a first screen, the second electronic device comprises a second screen, and the method comprises:
after a first user account is logged in to on the first screen, switching, by the first electronic device, a user account on the first screen to the first user account, and synchronizing the first user account to the second electronic device;
after a second user account is logged in to on the second screen, switching, by the second electronic device, a user account on the second screen to the second user account, and synchronizing the second user account to the first electronic device;
running, by the first electronic device, a first application on the first screen by using the first user account; and
running, by the second electronic device, the first application on the second screen by using the second user account.

12. The method according to claim 11, wherein after the first user account is logged in to on the first screen, the method further comprises: storing, by the first electronic device, a correspondence between a screen identifier of the first screen and a user identifier of the first user account; and
after the second user account is logged in to on the second screen, the method further comprises: storing, by the second electronic device, a correspondence between a screen identifier of the second screen and a user identifier of the second user account.

13. The method according to claim 11 or 12, wherein the method further comprises:
downloading a third application on the first screen by using the first user account;
synchronizing, by the first electronic device, related data of the third application to the second electronic device; and
running the third application on the second screen based on the related data of the third application by using the second user account.

14. An electronic device, wherein the electronic device comprises a memory and one or more processors, the memory is configured to store computer program code, the computer program code comprises computer instructions, and when the computer instructions are executed by the one or more processors, the electronic device is enabled to perform the method according to any one of claims 1 to 10.

15. A computer-readable storage medium, wherein the computer-readable storage medium stores a computer program, and when the computer program is run on a computer, the computer is enabled to perform the method according to any one of claims 1 to 10.

16. A system, comprising the first electronic device and the second electronic device according to any one of claims 11 to 13.
